# EUROPÄISCHE PATENTSCHRIFT

(11) **EP 3 163 242 B1**
(45) Veröffentlichungstag und Bekanntmachung des Hinweises auf die Patenterteilung: **03.04.2019**
(21) Anmeldenummer: 16194590.2
(22) Anmeldetag: 19.10.2016
(51) Int. Cl.: F28F 3/02, F02B 29/04, F28F 9/02, F28D 7/16

(54) **INDIREKTER LADELUFTKÜHLER**
INDIRECT CHARGE-AIR COOLER
INDIREKTER LADELUFTKÜHLER

(30) Priorität: 27.10.2015 DE 102015220965
(43) Veröffentlichungstag der Anmeldung: 03.05.2017
(73) Patentinhaber: Mahle International GmbH, 70376 Stuttgart (DE)
(72) Erfinder: FERRAND, Nicolas, 70191 Stuttgart (DE); SCHOETTLE, Olaf, 71272 Renningen (DE)
(74) Vertreter: BRP Renaud & Partner mbB Rechtsanwälte Patentanwälte Steuerberater

(56) Entgegenhaltungen:
- EP-A1- 1 707 911
- WO-A1-2014/140119
- DE-A1-102005 013 922
- DE-A1-102008 018 594
- FR-A1- 2 991 039
- FR-A1- 2 992 715
- US-A1- 2008 121 384

## Beschreibung

Die vorliegende Erfindung betrifft einen Wärmeübertrager, insbesondere einen indirekten Ladeluftkühler für eine Brennkraftmaschine, gemäß dem Oberbegriff des Anspruchs 1. Die Erfindung betrifft außerdem eine Brennkraftmaschine mit einem solchen, als Ladeluftkühler ausgebildeten Wärmeübertrager.

Aus der WO 2014/001366 A1 ist ein Wärmeübertrager mit Rohren bekannt, die ein erstes Kanalsystem für ein erstes, in eine erste Strömungsrichtung strömendes Fluid bilden. Zwischen diesen Rohren ist ein vom ersten Kanalsystem fluidisch getrenntes zweites Kanalsystem für ein zweites Fluid ausgebildet. Darüber hinaus sind zwei vom zweiten Kanalsystem fluidische getrennte Sammler vorgesehen, wovon zumindest einer ein Bodenteil und ein Kastenteil aufweist, die einen mit zumindest einem der Rohre fluidisch verbundenen Sammelraum des Sammlers begrenzen. Jedes Bodenteil weist dabei Öffnungen in der Art von Durchzügen auf, mit denen die Rohre derart verbunden sind, dass der zugehörige Sammelraum fluidisch vom zweiten Kanalsystem getrennt ist. Die Rohre sind darüber hinaus zwischen zwei gegenüberliegenden Seitenteilen zum fluidischen Begrenzen des zweiten Kanalsystems angeordnet.

Aus der WO 2014/140119 A1 ist ein weiterer, diesmal als Plattenwärmetauscher ausgebildeter Wärmeübertrager bekannt. Aus der FR 2 991 039 A1 ist ein Wärmetauscher gemäss dem Oberbegriff des Patentanspruchs 1 bekannt.

Bislang bekannte, indirekte Ladeluftkühler wurden üblicherweise in ein Ansaugmodul einer Brennkraftmaschine integriert und zusammen mit diesem montiert. Nachteilig hierbei war insbesondere ein vergleichsweise aufwändiges Kunststoffgehäuse für das Ansaugmodul sowie die Verwendung von Zugankern, um die vergleichsweise hohen Drücke aufnehmen zu können. Der für die Zuganker vorzuhaltende Platz war für eine Wärmeübertragerfläche nicht zugänglich, so dass direkt in das Ansaugmodul integrierte Ladeluftkühler ein reduziertes Wärmetauschervolumen besaßen und darüber hinaus zusätzliche Dichtungen erforderten.

Die vorliegende Erfindung beschäftigt sich daher mit dem Problem, für einen Wärmeübertrager der gattungsgemäßen Art eine verbesserte oder zumindest eine alternative Ausführungsform anzugeben, die insbesondere leistungsfähiger ist und leichter baut.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen als indirekten Ladeluftkühler ausgebildeten Wärmeübertrager nicht mehr in das Gehäuse eines Ansaugmoduls zu integrieren, sondern diesen mit einem eigenen, speziell zusammengesetzten Gehäuse auszustatten, wodurch der erfindungsgemäße Wärmeübertrager nicht nur kompakter baut, sondern auch äußerst druck- und temperaturbeständig ist und zudem eine größere Wärmetauscherfläche zur Verfügung stellen kann, als dies bei einer bisherigen Integration in einem Ansaugmodul erreichbar wäre. Darüber hinaus kann dadurch der erfindungsgemäße Wärmeübertrager auch an anderer Stelle, beispielsweise an einer Brennkraftmaschine, angeordnet werden. Der erfindungsgemäße Wärmeübertrager besitzt dabei Rohre, die ein erstes Kanalsystem für ein erstes, in eine erste Strömungsrichtung strömendes Fluid bilden, wobei zwischen den Rohren ein vom ersten Kanalsystem fluidisch getrenntes zweites Kanalsystems für ein zweites Fluid ausgebildet ist, das in einer zweiten Strömungsrichtung durchströmbar ist. Die erste und die zweite Strömungsrichtung sind dabei üblicherweise orthogonal zueinander. Darüber hinaus besitzt der Wärmeübertrager zwei vom zweiten Kanalsystem fluidisch getrennte Sammler, wovon zumindest einer ein Bodenteil und ein Kastenteil aufweist, die einen mit zumindest einem der Rohre fluidisch verbundenen Sammelraum des Sammlers begrenzen. Jedes Bodenteil weist dabei Öffnungen auf, beispielsweise Durchzüge, in denen die Rohre derart aufgenommen sind, bzw. mit denen die Rohre derart verbunden sind, dass der zugehörige Sammelraum fluidisch vom zweiten Kanalsystem getrennt ist. Die Rohre sind dabei zwischen zwei gegenüberliegenden Seitenteilen zum fluidischen begrenzen des zweiten Kanalsystems angeordnet. Erfindungsgemäß geht nun wenigstens ein Bodenteil oberflächenfluchtend in wenigstens ein zugehöriges Seitenteil über, wobei das wenigstens eine Bodenteil über eine linienartige zweite Kontaktfläche an wenigstens einem Seitenteil anliegen kann oder aber zwischen diesen beiden ein Spalt besteht. Das Vorsehen eines derartigen Spalts kann beispielsweise Vorteile hinsichtlich auszugleichender Fertigungstoleranzen haben. Wenigstens ein Kastenteil liegt über eine erste Kontaktfläche an wenigstens einem Seitenteil an. Das Kastenteil und das Seitenteil sind über die erste Kontaktfläche stoffschlüssig miteinander gefügt. Darüber hinaus besitzt der erfindungsgemäße Wärmeübertrager wenigstens ein Rahmenteil, das mit einem jeweiligen Außenrand der Seitenteile, einem jeweiligen Außenrand der Bodenteile und einem jeweiligen Außenrand der Kastenteile kraftschlüssig und/oder stoffschlüssig verbunden, beispielsweise verpresst und anschließend verlötet, ist.

Durch den gewählten Aufbau des erfindungsgemäßen Wärmeübertragers lässt sich dessen Gewicht im Vergleich zu einem bisherigen Gehäuse aus Polyamid PA6 und Zugankern um bis zu 30% reduzieren und die Druckfestigkeit deutlich steigern, so dass selbst Drücke von über 3 bar und Temperaturen von über 200°C von dem nunmehr erfindungsgemäß metallischen Gehäuse und dessen spezieller Konstruktion aus Seitenteilen, Kastenteilen, Bodenteilen und Rahmenteilen problemlos aufnehmbar sind. Durch den Wegfall der Zuganker können darüber hinaus die Flachrohre bzw. die Rohre allgemein dichter gepackt und damit die Außenabmessungen des Wärmeübertragers reduziert werden oder aber es kann der bislang für die Zuganker vorgehaltene Platz nunmehr für Rohre und damit für eine Wärmeübertragerfläche genutzt werden, wodurch eine verbesserte spezifische Leistung des erfindungsgemäßen Wärmeübertragers um bis zu 35% oberhalb jetziger Wärmeübertrager erreicht werden kann.

Gemäss der Erfindung weist zumindest ein Außenrand zumindest eines Seitenteils eine umgebogene Lasche als Randverstärkung auf, über die das Seitenteil mit dem Rahmenteil verbunden ist. Bei einer vorteilhaften Weiterbildung der erfindungsgemässen Lösung wird die umgebogene Lasche dabei in eine entsprechende Ausnehmung am Rahmenteil eingesteckt und dort formschlüssig bzw. kraftschlüssig gehalten, wobei hier üblicherweise zusätzlich eine Lotverbindung vorgesehen ist, wodurch auch eine stoffschlüssiges Verbinden zwischen der umgebogenen Lasche des Seitenteils und dem Rahmenteil erfolgt. Durch die umgebogene Lasche kann das Seitenteil im Bereich seines Außenrandes deutlich ausgesteift und damit das zum Teil durch das Seitenteil gebildete Gehäuse verstärkt werden. Ein weiterer Vorteil liegt hierbei darin, dass beim Umbiegen des Rahmenteils zum Herstellen der die umgebogene Lasche des Seitenteils aufnehmenden Aufnahme ein größerer Biegeradius vorliegt, der zu einer geringeren Materialbelastung führt.

Das Rahmenteil weist vorzugsweise einen S-förmigen Querschnitt mit einer ersten Aufnahme und einer dazu entgegengesetzt geöffneten zweite Aufnahme auf, wobei in der ersten Aufnahme die Außenränder zumindest eines Seitenteils, eines Bodenteils oder eines Kastenteils aufgenommen sind. Durch den S-förmigen Querschnitt des Rahmenteils im Verbindungsbereich zum Seitenteil bzw. zum Kastenteil oder Bodenteil besitzt auch das Rahmenteil eine vergleichsweise hohe Steifigkeit bei trotzdem vergleichsweise geringem Gewicht.

Bei einer vorteilhaften Weiterbildung der erfindungsgemäßen Lösung ist zumindest ein Wärmeübertragerelement von zumindest einem der Bodenteile beabstandet und zwar derart, dass randseitig des zweiten Kanalsystems ein freier Bypassabschnitt ausgebildet ist. Das Rahmenteil weist in diesem Bereich einen abstehenden Kragenabschnitt auf, der den Bypassabschnitt zur Reduzierung einer Bypassströmung des zweiten Fluides durch den Bypassabschnitt zumindest teilweise abdeckt. Durch den erfindungsgemäß vorgesehenen, abstehenden Kragenabschnitt lässt sich somit der unerwünschte Bypass des zweiten Fluides vergleichsweise einfach minimieren, ohne dass hierfür separate Dichtungen erforderlich sind. Der hierfür erforderliche Kragenabschnitt bildet lediglich einen leicht formbaren Fortsatz des Rahmenteils.

Bei einer weiteren vorteilhaften Ausführungsform der erfindungsgemäßen Lösung ist die linienartige zweite Kontaktfläche zwischen dem Bodenteil und dem zugehörigen Seitenteil durch eine seitenteilseitige Lasche gebildet, die in eine bodenseitige Ausnehmung eingreift. Die Ausnehmung besitzt darüber hinaus zwei seitliche Nasen zwischen denen die Lasche in der Ausnehmung verklemmt ist. Eine Innenabmessung zwischen den beiden Nasen ist somit in nicht montiertem Zustand zumindest geringfügig kleiner als eine Außenabmessung der seitenteilseitigen Lasche, so dass bei einem Eindrücken des Seitenteils mit seiner Lasche in die bodenseitige Ausnehmung die beiden seitlichen Nasen nach außen verdrängt werden und dadurch eine kraftschlüssige Verbindung zwischen dem Bodenteil und dem Seitenteil bewirkt wird. Selbstverständlich werden auch die Nasen mit der seitenteilseitigen Lasche noch verlötet, so dass hier neben dem Kraftschluss zusätzlich auch ein Stoffschluss vorliegt. Selbstverständlich ist dabei auch denkbar, dass die Lasche am Bodenteil und die zugehörige Ausnehmung am Seitenteil angeordnet sind.

Bei einer weiteren vorteilhaften Ausführungsform der erfindungsgemäßen Lösung sind im zweiten Kanalsystem Wärmeübertragerelemente, beispielsweise Wellrippen, generell Rippenstrukturen, angeordnet, die mit wenigstens einem der Rohre in wärmeübertragendem Kontakt stehen. Ein derartiger wärmeübertragender Kontakt kann beispielsweise mittels eines Verlötens des Wärmeübertragerelements mit dem zugehörigen Rohr bewirkt werden. Derartige Wärmeübertragerelemente erhöhen eine wärmeübertragende Fläche und damit die Leistung des erfindungsgemäßen Wärmeübertragers, wobei derartige Wärmeübertragerelemente zudem ein Verwirbeln des Fluides und damit ebenfalls eine verbesserte Wärmeübertragung bewirken.

Zweckmäßig ist das Rahmenteil über eine Crimpverbindung mit dem jeweiligen Außenrand der Seitenteile, dem jeweiligen Außenrand der Bodenteile und dem jeweiligen Außenrand der Kastenteile verbunden. Eine derartige Crimpverbindung wird dabei durch beispielsweise ein Verpressen der Außenränder des Seitenteils, des Bodenteils oder des Kastenteils in der ersten Aufnahme des Rahmenteils bewirkt. Eine derartige Crimpverbindung ermöglicht eine Vorfixierung, welche den erfindungsgemäßen Wärmeübertrager bei einem späteren Lötprozess fixiert, so dass der Wärmeübertrager im Lötofen nicht separat fixiert werden muss, wodurch sich erhebliche Prozessvorteile ergeben. Die stoffschlüssige Verbindung kann dabei beispielsweise durch eine Lotplattierung entlang der jeweiligen Außenränder und/oder in der ersten Aufnahme des Rahmenteils erfolgen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Explosionsdarstellung des erfindungsgemäßen Wärmeübertragers,
- Fig. 2: eine Detaildarstellung des erfindungsgemäßen Wärmeübertragers im Bereich eines Übergangs zwischen einem Seitenteil, einem Bodenteil, einem Kastenteil und einem Rahmenteil,
- Fig. 3: eine Darstellung wie in Fig. 2, jedoch mit teilweise geschnittenem Rahmenteil und ohne Kastenteil,
- Fig. 4: eine Ansicht von der Seite auf den erfindungsgemäßen Wärmeübertrager,
- Fig. 5: eine Detaildarstellung des Übergangs des Bodenteils und des Kastenteils in das Rahmenteil im Schnitt.

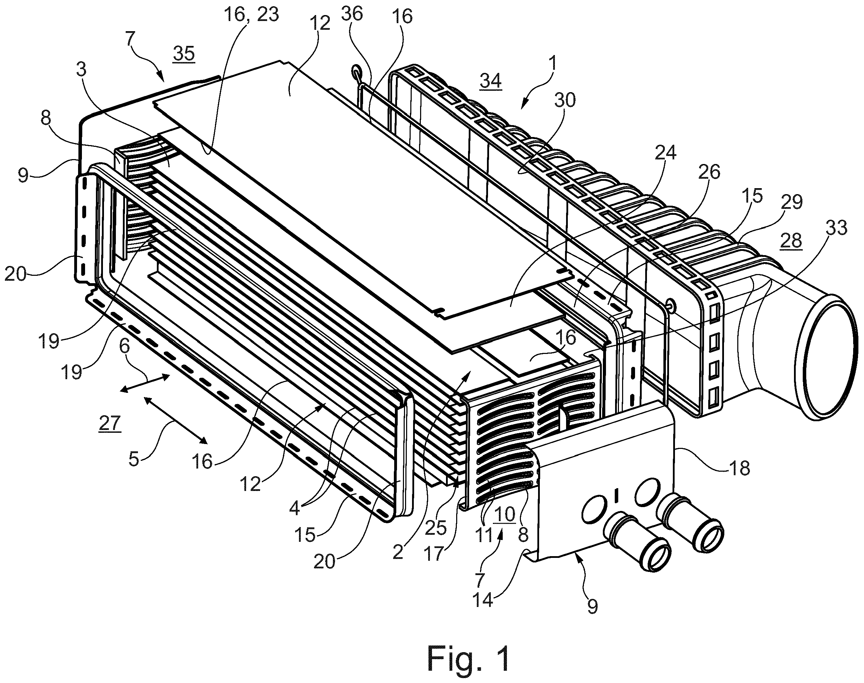

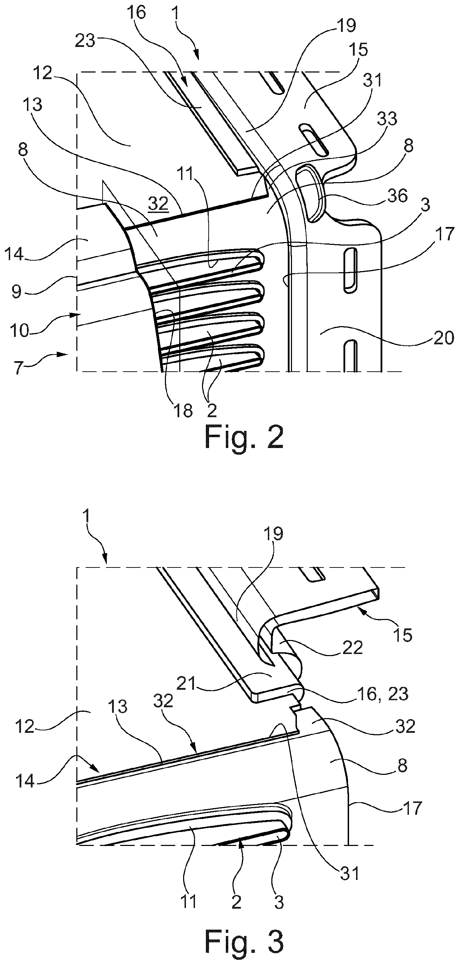

Entsprechend den Fig. 1 bis 3, weist ein erfindungsgemäßer Wärmeübertrager 1, der beispielsweise als indirekter Ladeluftkühler für eine Brennkraftmaschine 34 ausgebildet sein kann, Rohre 2, insbesondere Flachrohre, auf, die ein erstes Kanalsystem 3 für ein erstes, in eine erste Strömungsrichtung 5 strömendes Fluid bilden. Zwischen den Rohren 2 ist ein vom ersten Kanalsystem 3 fluidisch getrenntes zweites Kanalsystem 4 für ein zweites Fluid ausgebildet, das in einer zweiten Strömungsrichtung 6 durchströmbar ist. Das erste Fluid ist dabei beispielsweise Kühlmittel, während das zweite Fluid Ladeluft sein kann. Darüber hinaus vorgesehen sind zwei vom zweiten Kanalsystem 4 fluidisch getrennte Sammler 7, wovon zumindest einer ein Bodenteil 8 ein Kastenteil 9 aufweist, die einen mit zumindest einem der Rohre 2 fluidisch verbundenen Sammelraum 10 des Sammlers 7 begrenzen. Jedes Bodenteil 8 weist dabei Öffnungen 11 auf, beispielsweise in der Art von aufgestellten Durchzügen, in denen die Rohre 2 aufgenommen bzw. mit denen die Rohre 2 derart verbunden sind, dass der zugehörige Sammelraum 10 fluidisch vom zweiten Kanalsystem 4 getrennt ist. Gegenüberliegend und ein Gehäuse bildend sind darüber hinaus zwei Seitenteile 12 zum fluidischen begrenzen des zweiten Kanalsystems 4 vorgesehen, zwischen denen die Rohre 2 angeordnet sind. Dabei kann nun wenigstens ein Bodenteil 8 über eine linienartige zweite Kontaktfläche 13 (vgl. insbesondere die Fig. 2 und 3) an wenigstens einem Seitenteil 12 anliegen, während wenigstens ein Kastenteil 9 über eine erste Kontaktfläche 14 an wenigstens einem Seitenteil 12 anliegt. Dabei ist auch denkbar ist, dass zwischen dem Bodenteil 8 und dem Seitenteil 12 ein Spalt angeordnet ist, der dazu beiträgt, Fertigungstoleranzen auszugleichen. Dieser Spalt wird anschließend von dem Kastenteil 9 überdeckt und dadurch dicht verschlossen. Dabei liegt das Kastenteil 9 sowohl an der zweiten Kontaktfläche 14 als auch am Bodenteil 8 an und wird darüber dicht verlötet. Das Bodenteil 8 und das zugehörige Seitenteil 12 sind vorzugsweise über die zweite Kontaktfläche 13 stoffschlüssig miteinander gefügt, während das Kastenteil 9 und das Seitenteil 12 über die erste Kontaktfläche 14 stoffschlüssig miteinander gefügt sind, beispielsweise verlötet. Der erfindungsgemäße Wärmeübertrager 1 weist darüber hinaus wenigstens ein Rahmenteil 15, hier zwei Rahmenteile 15, auf, das mit einem jeweiligen Außenrand 16 der Seitenteile 12, einem jeweiligen Außenrand 17 der Bodenteile 8 und einem jeweiligen Außenrand 18 der Kastenteile 9 kraftschlüssig und/oder stoffschlüssig verbunden, beispielsweise verpresst und anschließend verlötet, ist. Eine derartige stoffschlüssige Verbindung sichert dabei die Dichtigkeit und unterstützt die mechanische Verbindung.

Zumindest ein Außenrand 16 zumindest eines Seitenteils 12 kann darüber hinaus eine umgebogene Lasche 23 als Randverstärkung aufweisen, wie dies beispielsweise den Fig. 1 bis 3 zu entnehmen ist. Über diese umgebogene und als Randverstärkung ausgebildete Lasche 23 ist das Seitenteil 12 mit dem Rahmenteil 15 verbunden. Das Rahmenteil 15 besitzt dabei einen S-förmigen Querschnitt (vgl. auch die Fig. 3 bis 5) mit einer ersten Aufnahme 21 und einer dazu entgegengesetzt geöffneten zweiten Aufnahme 22, wobei in der ersten Aufnahme 21 die Außenränder zumindest eines Seitenteils 12 eines Bodenteils 8 oder eines Kastenteils 9 aufgenommen sind. Die Seitenränder 16, 17 und 18 sind dabei in der ersten Aufnahme 21 des Rahmenteils 15 verklemmt bzw. verpresst, so dass das Rahmenteil 15 mit dem jeweiligen Außenrand 16 der Seitenteile 12, den jeweiligen Außenrand 17 der Bodenteile 8 und dem jeweiligen Außenrand 18 der Kastenteile 9 über eine Pressverbindung verbunden ist. Eine derartige Pressverbindung stellt eine kraftschlüssige Verbindung dar und ermöglicht eine Fixierung der genannten Teile aneinander. Zur Unterstützung der mechanischen Fixierung bzw. auch zur Unterstützung einer Dichtfunktion können die einzelnen Außenränder 16, 17 und 18 in der jeweiligen Aufnahme 21 des Rahmenteils 12 zusätzlich noch verlötet sein.

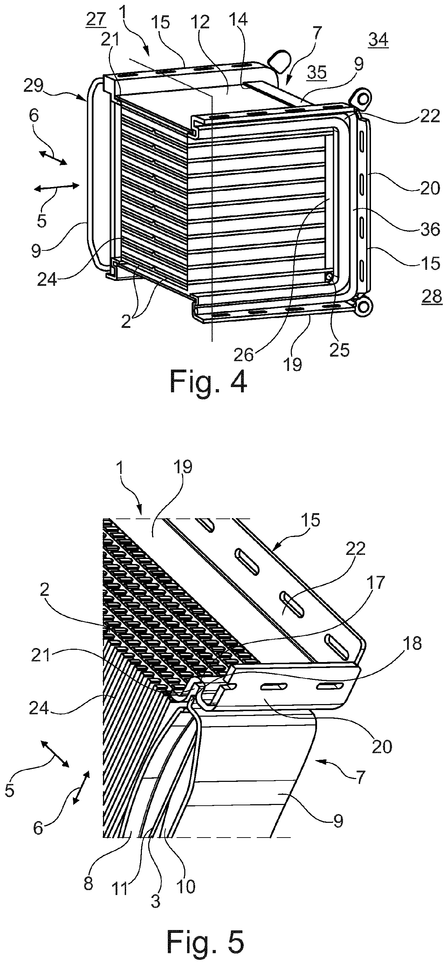

Betrachtet man die Fig. 1 und 4, so kann man erkennen, dass das Rahmenteil 15 als geschlossener viereckiger Rahmen mit zwei Längsseiten 19 und zwei Querseiten 20 ausgebildet ist, wobei jede Längsseite 19 mit einem zugehörigen Außenrand 16 eines Seitenteils 12 und jede Querseite 20 mit einem zugehörigen Außenrand 17 des Bodenteils 8 und des Kastenteils 9 verbunden ist.

Um eine Wärmeübertrag zwischen dem ersten und zweiten Fluid verbessern zu können, sind im zweiten Kanalsystem 4 Wärmeübertragerelemente 24, insbesondere Rippenstrukturen, angeordnet, die mit wenigstens einem der Rohre 2 in wärmeübertragendem Kontakt stehen. Dabei können derartige Wärmeübertragerelemente 24 auch zwischen dem außen angeordneten Seitenteil 12 und den benachbarten Rohren 2 angeordnet sein. Um einen Wärmeübertrag weiter steigern zu können, können die Wärmeübertragerelemente 24 mit zumindest einem der Rohre 2 und/oder je nach Lage mit dem Seitenteil 12 verbunden, insbesondere verlötet, sein.

Betrachtet man speziell die Fig.1, so kann man erkennen, dass zumindest ein Wärmeübertragerelement 24 von zumindest einem der Bodenteile 8 beabstandet ist und zwar derart, dass randseitig des zweiten Kanalsystems ein freier Bypassabschnitt 25 verbleibt. Das Rahmenteil 15 kann hier einen Kragenabschnitt 26 aufweisen (vgl. auch Fig. 4), der den Bypassabschnitt 25 zur Reduzierung einer unerwünschten Bypassströmung des zweiten Fluids zumindest teilweise abdeckt.

Betrachtet man nochmals die kraftschlüssige und teilweise sogar formschlüssige Verbindung zwischen dem Seitenteil 12 und dem Bodenteil 8, kann man gemäß der Fig. 2 erkennen, dass die linienartige zweite Kontaktfläche 13 durch eine seitenteilseitige Lasche 32 gebildet ist, welche in eine bodenseitige Ausnehmung 31 eingreift. Die Ausnehmung 31 besitzt dabei zwei seitliche Nasen 33 (vgl. auch Fig. 1), zwischen denen die Lasche 32 in der Ausnehmung 31 verklemmt wird. Bei einem Montieren des erfindungsgemäßen Wärmeübertragers 1 wird somit das Seitenteil 12 mit seiner Lasche 32 in den bodenteilseitige Ausnehmung 31 unter einem seitlichen Verdrängen der Nasen 33 eingedrückt. Selbstverständlich ist dabei auch denkbar, dass die Lasche 32 am Bodenteil 8 und die zugehörige Ausnehmung 31 am Seitenteil 12 angeordnet sind.

Generell kann mit dem erfindungsgemäßen Wärmeübertrager 1 und dessen Rahmenteile 15, Seitenteile 12, Bodenteile 8 und Kastenteile 9 ein nicht nur leistungsstarker, sondern zugleich auch gewichtsoptimierter Wärmeübertrager 1 geschaffen werden, da dieser im Vergleich zu bisherigen Wärmeübertrager kein deutlich schwereres Kunststoffgehäuse mehr benötigt. Ein derartiges schweres Kunststoffgehäuse war erforderlich, um die auftretenden Drücke problemlos aufnehmen zu können.

Eingesetzt wird der erfindungsgemäße Wärmeübertrager 1 in einer Brennkraftmaschine 34 und hier insbesondere als Ladeluftkühler. Die Seitenteile 12 des Wärmeübertragers 1 können dabei eine Außenwand einer Frischluftanlage 35 bilden. Diese Frischluftanlage 35 weist üblicherweise eine stromauf des Wärmeübertragers 1 angeordneten ersten Kanalabschnitt 27 und einen stromab des Wärmeübertragers 1 angeordneten zweiten Kanalabschnitt 28 auf, wobei der Wärmeübertrager 1 mittels eines Rahmenteils 15 mechanisch und fluidisch mit zumindest einem der Kanalabschnitte 27, 28 verbunden ist.

Der erste oder zweite Kanalabschnitt 27, 28 kann dabei eine wie in Fig. 1 dargestellten Diffusor 29 aufweisen, dessen Außenrand 30 in der zweiten Aufnahme 22 des Rahmenteils 15 des Wärmeübertragers 1 aufgenommen und dort beispielsweise ebenfalls über eine Crimpverbindung gehalten ist. Um eine Verbindung zwischen dem Diffusor 29 einerseits und dem Rahmenteil 15 andererseits abdichten zu können, kann zusätzlich eine Dichtung 36 (vgl. die Fig. 1, 2 und 4), vorgesehen sein.

## Patentansprüche

1. Wärmeübertrager (1), insbesondere indirekter Ladeluftkühler für eine Brennkraftmaschine (34),
- mit Rohren (2), die ein erstes Kanalsystem (3) für ein erstes, in eine erste Strömungsrichtung (5) strömendes Fluid bilden,
- wobei zwischen den Rohren (2) ein vom ersten Kanalsystem (3) fluidisch getrenntes zweites Kanalsystem (4) für ein zweites Fluid ausgebildet ist, das in einer zweiten Strömungsrichtung (6) durchströmbar ist,
- mit zwei vom zweiten Kanalsystem (4) fluidisch getrennten Sammlern (7), wovon zumindest einer ein Bodenteil (8) und ein Kastenteil (9) aufweist, die einen mit zumindest einem der Rohre (2) fluidisch verbundenen Sammelraum (10) des Sammlers (7) begrenzen,
- wobei jedes Bodenteil (8) Öffnungen (11) aufweist mit denen die Rohre (2) derart verbunden sind, dass der zugehörige Sammelraum (10) fluidisch vom zweiten Kanalsystem (4) getrennt ist,
- mit zwei gegenüberliegenden Seitenteilen (12) zum fluidischen Begrenzen des zweiten Kanalsystems (4), zwischen denen die Rohre (2) angeordnet sind,
- wobei wenigstens ein Bodenteil (8) oberflächenfluchtend in ein zugehöriges Seitenteil (12) übergeht,
- wobei wenigstens ein Kastenteil (9) über eine erste Kontaktfläche (14) an wenigstens einem Seitenteil (12) anliegt,
- wobei das Kastenteil (9) und das Seitenteil (12) über die erste Kontaktfläche (14) stoffschlüssig miteinander gefügt sind,
- wobei der Wärmeübertrager (1) wenigstens ein Rahmenteil (15) aufweist, das mit einem jeweiligen Außenrand (16) der Seitenteile (12), einem jeweiligen Außenrand (17) der Bodenteile (8) und einem jeweiligen Außenrand (18) der Kastenteile (9) kraftschlüssig und/oder stoffschlüssig verbunden, beispielsweise verpresst und anschließend verlötet, ist,
**dadurch gekennzeichnet,**
**dass** zumindest ein Außenrand (16) zumindest eines Seitenteils (12) eine umgebogene Lasche (23) als Randverstärkung aufweist, über die das Seitenteil (12) mit dem Rahmenteil (15) verbunden ist.

2. Wärmeübertrager nach Anspruch 1,
**dadurch gekennzeichnet,**
**dass** das Rahmenteil (15) über eine Pressverbindung
mit dem jeweiligen Außenrand (16) der Seitenteile (12), dem jeweiligen Außenrand (17) der Bodenteile (8) und dem jeweiligen Außenrand (18) der Kastenteile (9) verbunden ist.

3. Wärmeübertrager nach Anspruch 1 oder 2,
**dadurch gekennzeichnet,**
**dass** das Rahmenteil (15) als geschlossener viereckiger Rahmen mit zwei Längsseiten (19) und zwei Querseiten (20) ausgebildet ist, wobei jede Längsseite (19) mit einem zugehörigen Außenrand (16) eines Seitenteils (12) und jede Querseite (20) mit einem zugehörigen Außenrand (17) des Bodenteils (8) und des Kastenteils (9) verbunden ist.

4. Wärmeübertrager nach einem der Ansprüche 1 bis 3,
**dadurch gekennzeichnet,**
**dass** das Rahmenteil (15) einen S-förmigen Querschnitt mit einer ersten Aufnahme (21) und einer dazu entgegengesetzt geöffneten zweiten Aufnahme (22) aufweist, wobei in der ersten Aufnahme (21) die Außenränder zumindest (16) eines Seitenteils (12), eines Bodenteils (8) oder eines Kastenteils (9) aufgenommen sind.

5. Wärmeübertrager nach einem der Ansprüche 1 bis 4,
**dadurch gekennzeichnet,**
- **dass** im zweiten Kanalsystem (4) Wärmeübertragerelemente (24), insbesondere Rippenstrukturen, angeordnet sind, die mit wenigstens einem der Rohre (2) in wärmeübertragendem Kontakt stehen, und/oder
- **dass** zwischen zumindest einem der Seitenteile (12) und zumindest einem der nächstbenachbarten Rohre (2) ein Wärmeübertragerelement (24), insbesondere eine Rippenstruktur, angeordnet ist.

6. Wärmeübertrager nach Anspruch 5,
**dadurch gekennzeichnet,**
**dass** zumindest ein Wärmeübertragerelement (24) mit zumindest einem der Rohre (2) verlötet ist.

7. Wärmeübertrager nach Anspruch 5 oder 6,
**dadurch gekennzeichnet,**
- **dass** zumindest ein Wärmeübertragerelement (24) von zumindest einem der Bodenteile (8) beabstandet ist, derart, dass randseitig des zweiten Kanalsystems (4) ein freier Bypassabschnitt (25) ausgebildet ist,
- **dass** das Rahmenteil (15) einen abstehenden Kragenabschnitt (26) aufweist, der den Bypassabschnitt (25) zur Reduzierung einer Bypassströmung des zweiten Fluids durch den Bypassabschnitt (25) zumindest teilweise abdeckt.

8. Wärmeübertrager nach einem der vorhergehenden Ansprüche,
**dadurch gekennzeichnet,**
- **dass** wenigstens ein Bodenteil (8) über eine linienartige zweite Kontaktfläche (13) am Seitenteil (12) anliegt,
- **dass** die linienartige zweite Kontaktfläche (13) durch eine seitenteilseitige Lasche (32) gebildet ist, die in eine bodenseitige Ausnehmung (31) eingreift,
- **dass** die Ausnehmung (31) zwei seitliche Nasen (33) aufweist, zwischen denen die Lasche (32) in der Ausnehmung (31) verklemmt ist.

9. Brennkraftmaschine (34) mit einem als Ladeluftkühler ausgebildeten Wärmeübertrager (1) nach einem der Ansprüche 1 bis 8.

10. Brennkraftmaschine nach Anspruch 9,
**dadurch gekennzeichnet,**
**dass** die Seitenteile (12) des Wärmeübertragers (1) eine Außenwand einer Frischluftanlage (35) bilden.

11. Brennkraftmaschine nach Anspruch 10,
**dadurch gekennzeichnet,**
**dass** die Frischluftanlage (35) einen stromauf des Wärmeübertragers (1) angeordneten ersten Kanalabschnitt (27) und einen stromab des Wärmeübertragers angeordnet zweiten Kanalabschnitt (28) aufweist, wobei der Wärmeübertrager (1) mittels eines solchen Rahmenteils (15) mechanisch und fluidisch mit zumindest einem der Kanalabschnitte (27,28) verbunden ist.

12. Brennkraftmaschine nach Anspruch 11,
**dadurch gekennzeichnet,**
**dass** der erste oder der zweite Kanalabschnitt (27,28) einen Diffusor (29) aufweisen, dessen Außenrand (30) in einer zweiten Aufnahme (22) des Rahmenteils (15) des Wärmeübertragers (1) aufgenommen ist.

## Claims

1. Heat transfer device (1), in particular indirect charge air cooler for an internal combustion engine (34),
- having pipes (2), which form a first duct system (3) for a first fluid flowing in a first flow direction (5),
- wherein a second duct system (4) fluidically separated from the first duct system (3) is configured, between the pipes (2), for a second fluid to flow through in a second flow direction (6),
- having two collectors (7) fluidically separated from the second duct system (4), at least one of which has a base part (8) and a box part (9), which delimit a collecting chamber (10) of the collector (7) fluidically connected to at least one of the pipes (2),
- wherein each base part (8) has openings (11) to which the pipes (2) are connected, such that the associated collecting chamber (10) is fluidically separated from the second duct system (4),
- having two opposite side parts (12) for fluidic delimitation of the second duct system (4), between which the pipes (2) are disposed,
- wherein at least one base part (8) transitions into an associated side part (12) in a surface-flush manner,
- wherein at least one box part (9) lies against at least one side part (12) via a first contact surface (14),
- wherein the box part (9) and the side part (12) are cohesively joined to one another via the first contact surface (14),
- wherein the heat transfer device (1) has at least one frame part (15), which is connected non-positively and/or cohesively, for example pressed and then brazed, onto a respective outer edge (16) of the side parts (12), a respective outer edge (17) of the base parts (8) and a respective outer edge (18) of the box parts (9),
**characterised in that** at least one outer edge (16) of at least one side part (12) has a bent-over lug (23) as edge reinforcement, via which the side part (12) is connected to the frame part (15).

2. Heat transfer device according to claim 1, **characterised in that** the frame part (15) is connected to the respective outer edge (16) of the side parts (12), the respective outer edge (17) of the base parts (8) and the respective outer edge (18) of the box parts (9) via a compression connection.

3. Heat transfer device according to claim 1 or 2, **characterised in that** the frame part (15) is configured as closed quadrangular frame with two longitudinal sides (19) and two transverse sides (20), wherein each longitudinal side (19) is connected to an associated outer edge (16) of a side part (12) and each transverse side (20) is connected to an associated outer edge (17) of the base part (8) and of the box part (9).

4. Heat transfer device according to any one of claims 1 to 3, **characterised in that** the frame part (15) has an S-shaped cross-section with a first receptacle (21) and a second receptacle (22) open oppositely thereto, wherein the outer edges of at least (16) one side part (12), of one base part (8) or of one box part (9) are received in the first receptacle (21).

5. Heat transfer device according to any one of claims 1 to 4, **characterised in that**
- heat transfer device elements (24), in particular fin structures, that are in heat-transferring contact with at least one of the pipes (2) are disposed in the second duct system (4), and/or
- a heat transfer device element (24), in particular a fin structure, is disposed between at least one of the side parts (12) and at least one of the nearest neighbouring pipes (2).

6. Heat transfer device according to claim 5, **characterised in that** at least one heat transfer device element (24) is brazed onto at least one of the pipes (2).

7. Heat transfer device according to claim 5 or 6, **characterised in that**
- at least one heat transfer device element (24) is spaced apart from at least one of the base parts (8), such that a free bypass section (25) is configured on the edge side of the second duct system (4),
- the frame part (15) has a projecting collar section (26), which at least partially covers the bypass section (25) to reduce a bypass flow of the second fluid through the bypass section (25).

8. Heat transfer device according to any one of the preceding claims, **characterised in that**
- at least one base part (8) lies against the side part (12) via a linear second contact surface (13),
- the linear second contact surface (13) is formed by a lug (32) on the side of a side part, which engages into a recess (31) on the base part,
- the recess (31) has two lateral protrusions (33), between which the lug (32) is jammed in the recess (31).

9. Internal combustion engine (34) comprising a heat transfer device (1) configured as charge air cooler according to any one of claims 1 to 8.

10. Internal combustion engine according to claim 9, **characterised in that** the side parts (12) of the heat transfer device (1) form an outer wall of a fresh air system (35).

11. Internal combustion engine according to claim 10, **characterised in that** the fresh air system (35) has a first duct section (27) disposed upstream of the heat transfer device (1) and a second duct section (28) disposed downstream of the heat transfer device, wherein the heat transfer device (1) is connected mechanically and fluidically to at least one of the duct sections (27,28) by means of such a frame part (15).

12. Internal combustion engine according to claim 11, **characterised in that** the first or the second duct section (27,28) comprises a diffusor (29), the outer edge (30) of which is received in a second receptacle (22) of the frame part (15) of the heat transfer device (1).

## Revendications

1. Échangeur de chaleur (1), en particulier refroidisseur d'air de suralimentation indirect pour un moteur à combustion interne (34),
- avec des tubes (2), qui forment un premier système de canaux (3) pour un premier fluide s'écoulant dans un premier sens d'écoulement (5),
- dans lequel un deuxième système de canaux (4) séparé fluidiquement du premier système de canaux (3) pour un deuxième fluide, qui peut être traversé dans un deuxième sens d'écoulement (6), est réalisé entre les tubes (2),
- avec deux collecteurs (7) séparés fluidiquement du deuxième système de canaux (4), dont au moins un présente une partie de fond (8) et une partie de caisse (9), qui délimitent un espace de collecte (10) du collecteur (7) relié fluidiquement à au moins un des tubes (2),
- dans lequel chaque partie de fond (8) présente des ouvertures (11) auxquelles les tubes (2) sont reliés de sorte que l'espace de collecte (10) correspondant est séparé fluidiquement du deuxième système de canaux (4),
- avec deux parties latérales opposées (12) pour la délimitation fluidique du deuxième système de canaux (4), entre lesquelles les tubes (2) sont agencés,
- dans lequel au moins une partie de fond (8) se transforme par alignement de surface en une partie latérale (12) correspondante,
- dans lequel au moins une partie de caisse (9) s'applique sur au moins une partie latérale (12) par le biais d'une première surface de contact (14),
- dans lequel la partie de caisse (9) et la partie latérale (12) sont assemblées l'une à l'autre par liaison de matière par le biais de la première surface de contact (14),
- dans lequel l'échangeur de chaleur (1) présente au moins une partie de cadre (15), qui est reliée par force et/ou par liaison de matière, par exemple compressée et ensuite brasée, à un bord extérieur (16) respectif des parties latérales (12), un bord extérieur (17) respectif des parties de fond (8) et un bord extérieur (18) respectif des parties de caisse (9),
**caractérisé en ce**
**qu'**au moins un bord extérieur (16) d'au moins une partie latérale (12) présente une languette repliée (23) en tant que renfort de bord, par le biais de laquelle la partie latérale (12) est reliée à la partie de cadre (15).

2. Échangeur de chaleur selon la revendication 1,
**caractérisé en ce**
**que** la partie de cadre (15) est reliée au bord extérieur (16) respectif des parties latérales (12), au bord extérieur (17) respectif des parties de fond (8) et au bord extérieur (18) respectif des parties de caisse (9) par le biais d'un emmanchement.

3. Échangeur de chaleur selon la revendication 1 ou 2,
**caractérisé en ce**
**que** la partie de cadre (15) est réalisée en tant que cadre carré fermé avec deux côtés longs (19) et deux côtés transversaux (20), dans lequel chaque côté long (19) est relié à un bord extérieur (16) correspondant d'une partie latérale (12) et chaque côté transversal (20) est relié à un bord extérieur (17) correspondant de la partie de fond (8) et de la partie de caisse (9).

4. Échangeur de chaleur selon l'une quelconque des revendications 1 à 3,
**caractérisé en ce**
**que** la partie de cadre (15) présente une section transversale en forme de S avec un premier logement (21) et un deuxième logement (22) ouvert opposé, dans lequel les bords extérieurs d'au moins (16) une partie latérale (12), une partie de fond (8) ou une partie de caisse (9) sont reçus dans le premier logement (21).

5. Échangeur de chaleur selon l'une quelconque des revendications 1 à 4,
**caractérisé en ce**
- **que** des éléments d'échangeur de chaleur (24), en particulier des structures nervurées, qui sont en contact d'échange de chaleur avec au moins un des tubes (2), sont agencés dans le deuxième système de canaux (4), et/ou
- **qu'**un élément d'échangeur de chaleur (24), en particulier une structure nervurée, est agencée entre au moins une des parties latérales (12) et au moins un des tubes les plus proches (2).

6. Échangeur de chaleur selon la revendication 5,
**caractérisé en ce**
**qu'**au moins un élément d'échangeur de chaleur (24) est brasé avec au moins un des tubes (2).

7. Échangeur de chaleur selon la revendication 5 ou 6,
**caractérisé en ce**
- **qu'**au moins un élément d'échangeur de chaleur (24) est espacé d'au moins une des parties de fond (8) de sorte qu'une section de dérivation libre (25) est réalisée côté bord du deuxième système de canaux (4),
- **que** la partie de cadre (15) présente une section de collet (26) en saillie qui couvre au moins en partie la section de dérivation (25) pour la réduction d'un écoulement de dérivation du deuxième fluide par la section de dérivation (25).

8. Échangeur de chaleur selon l'une quelconque des revendications précédentes,
**caractérisé en ce**
- **qu'**au moins une partie de fond (8) s'applique sur la partie latérale (12) par le biais d'une deuxième surface de contact de type ligne (13),
- **que** la deuxième surface de contact de type ligne (13) est formée par une languette (32) côté partie latérale, qui vient en prise dans un évidement côté fond (31),
- **que** l'évidement (31) présente deux nez latéraux (33), entre lesquels la languette (32) est coincée dans l'évidement (31).

9. Moteur à combustion interne (34) avec un échangeur de chaleur (1) réalisé en tant que refroidisseur d'air de suralimentation selon l'une quelconque des revendications 1 à 8.

10. Moteur à combustion interne selon la revendication 9,
**caractérisé en ce**
**que** les parties latérales (12) de l'échangeur de chaleur (1) forment une paroi extérieure d'une installation d'air frais (35).

11. Moteur à combustion interne selon la revendication 10,
**caractérisé en ce**
**que** l'installation d'air frais (35) présente une première section de canaux (27) agencée en amont de l'échangeur de chaleur (1) et une deuxième section de canaux (28) agencée en aval de l'échangeur de chaleur, dans lequel l'échangeur de chaleur (1) est relié mécaniquement et fluidiquement à au moins une des section de canaux (27, 28) au moyen d'une telle partie de cadre (15).

12. Moteur à combustion interne selon la revendication 11,
**caractérisé en ce**
**que** la première ou la deuxième section de canaux (27, 28) présentent un diffuseur (29) dont le bord extérieur (30) est reçu dans un deuxième logement (22) de la partie de cadre (15) de l'échangeur de chaleur (1).
